# EUROPEAN PATENT SPECIFICATION

(11) **EP 4 160 345 B1**
(45) Date of publication and mention of the grant of the patent: **24.04.2024**
(21) Application number: 22195032.2
(22) Date of filing: 12.09.2022
(51) Int. Cl.: G05B 23/02

(54) **SYSTEMS AND METHODS FOR DETERMINING A HEALTH INDICATION OF A MECHANICAL COMPONENT**
SYSTEME UND VERFAHREN ZUR BESTIMMUNG EINER GESUNDHEITSANZEIGE EINER MECHANISCHEN KOMPONENTE
SYSTÈMES ET PROCÉDÉS POUR DÉTERMINER UNE INDICATION DE SANTÉ D'UN COMPOSANT MÉCANIQUE

(30) Priority: 01.10.2021 IN 202111044564; 14.04.2022 US 202217659276
(43) Date of publication of application: 05.04.2023
(73) Proprietor: Honeywell International Inc., Charlotte, NC 28202 (US)
(72) Inventor: ROBINSON, Andre, Charlotte, 28202 (US); RAJU BK, Balasubramanya, Charlotte, 28202 (US); SHASTRY CR, Manu, Charlotte, 28202 (US); MUNIRAJU, Raghavendra, Charlotte, 28202 (US); THOTADAKUMBRI VENKATARAO, Raviprakash, Charlotte, 28202 (US)
(74) Representative: Haseltine Lake Kempner LLP

(56) References cited:
- US-A1- 2008 036 617
- US-A1- 2021 123 835
- US-B1- 9 791 910

## Description

### CROSS-REFERENCE TO RELATED APPLICATION(S)

The present application claims the benefit of priority to U.S. Non-Provisional Patent Application No. 17/659,276, entitled "SYSTEMS AND METHODS FOR DETERMINING A HEALTH INDICATION OF A MECHANICAL COMPONENT," which was filed on April 14, 2022, and Indian Patent Application No. 202111044564, entitled "SYSTEMS AND METHODS FOR DETERMINING A HEALTH INDICATION OF A MECHANICAL COMPONENT," which was filed on October 1, 2021.

### TECHNICAL FIELD

Various embodiments of the present disclosure generally relate to monitoring the health of components of a vehicle and, more particularly, to systems and methods for determining a health indication of mechanical components of such vehicles.

### BACKGROUND

Prognostics and health monitoring (PHM) of aircraft or vehicle mechanical components entails collecting physical data associated with the vehicle components. For example, PHM may include monitoring parameters, such as, for example, sound, vibration, temperature, power consumed, magnetic fields, electro-magnetic radiation, or the like, associated with a particular mechanical component of the vehicle. Currently, maintenance of aircraft or other types of vehicles is performed periodically (e.g., at fixed intervals), or when there are physical signs of failure of a component. Such maintenance techniques are based on experience of a maintenance technician or manual and visual observations.

Fixed interval maintenance requires vehicle down time and may cause removal of parts which might still have useful life remaining. Similarly, performing maintenance after detecting failure of a component can cause untimely delays and costly repairs. Such delays may lead to unscheduled aircraft or vehicle down time, which may lead to revenue loss or loss of reputation. Thus, current reactive and/or preventative maintenance techniques may be inadequate and/or may be inefficient and may lead to replacing parts that may still have remaining life and/or may lead to unplanned downtime of a vehicle.

The present disclosure is directed to overcoming one or more of these above-referenced challenges. The background description provided herein is for the purpose of generally presenting the context of the disclosure. Unless otherwise indicated herein, the materials described in this section are not prior art to the claims in this application and are not admitted to be prior art, or suggestions of the prior art, by inclusion in this section. US 9,791,910 B1 discloses predictive power management in a wireless sensor network using presence detection.

### SUMMARY OF THE DISCLOSURE

According to certain aspects of the disclosure, systems and methods are disclosed for determining a health indication of a mechanical component.

In one embodiment, a method for determining a health indication of a mechanical component is disclosed. The method includes: receiving, by a processor of a multi-sensor node device having a plurality of sensors, a configuration defining activation of the plurality of sensors based on a type of mechanical component to which the multi-sensor node device is coupled and based on a level of energy harvesting available at the multi-sensor node device; determining, by the processor of the multi-sensor node device, to activate a first sensor of the plurality of sensors based on the received configuration; collecting, by the processor of the multi-sensor node device, data from the first sensor relating to a first parameter of the mechanical component; determining, by the processor of the multi-sensor node device, to activate a second sensor of the plurality of sensors based on determining that the data collected from the first sensor indicates a threshold is exceeded; collecting, by the processor of the multi-sensor node device, data from the second sensor relating to a second parameter of the mechanical component; determining, by the processor of the multi-sensor node device, an initial health indication of the mechanical component based at least in part on the data collected from the second sensor; and transmitting, by the processor of the multi-sensor node device, the determined initial health indication of the mechanical component to a remote computing system.

In another embodiment, a multi-sensor node device is disclosed. The multi-sensor node device includes: a plurality of sensors configured to collect data from a mechanical component; a memory device storing instructions for determining a health indication of the mechanical component; and a processor executing the instructions to perform a method including: receiving a configuration defining activation of the plurality of sensors based on a type of mechanical component to which the multi-sensor node device is coupled and based on a level of energy harvesting available at the multi-sensor node device; determining to activate a first sensor of the plurality of sensors based on the received configuration; collecting data from the first sensor relating to a first parameter of the mechanical component; determining to activate a second sensor of the plurality of sensors based on determining that the data collected from the first sensor indicates a threshold is exceeded; collecting data from the second sensor relating to a second parameter of the mechanical component; determining an initial health indication of the mechanical component based at least in part on the data collected from the second sensor; and transmitting the determined initial health indication of the mechanical component to a remote computing system.

In yet another embodiment, a non-transitory computer-readable medium storing instructions that, when executed by a processor, cause the processor to perform a method for determining a health indication of a mechanical component is disclosed. The method includes: receiving, by a processor of a multi-sensor node device having a plurality of sensors, a configuration defining activation of the plurality of sensors based on a type of mechanical component to which the multi-sensor node device is coupled and based on a level of energy harvesting available at the multi-sensor node device; determining, by the processor of the multi-sensor node device, to activate a first sensor of the plurality of sensors based on the received configuration; collecting, by the processor of the multi-sensor node device, data from the first sensor relating to a first parameter of the mechanical component; determining, by the processor of the multi-sensor node device, to activate a second sensor of the plurality of sensors based on determining that the data collected from the first sensor indicates a threshold is exceeded; collecting, by the processor of the multi-sensor node device, data from the second sensor relating to a second parameter of the mechanical component; determining, by the processor of the multi-sensor node device, an initial health indication of the mechanical component based at least in part on the data collected from the second sensor; and transmitting, by the processor of the multi-sensor node device, the determined initial health indication of the mechanical component to a remote computing system

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts a system diagram of a system for determining a health indication of a mechanical component, according to one or more embodiments.
FIG. 2 depicts a block diagram of a multi-sensor node device of the system of FIG. 1, according to embodiments of the present disclosure
FIG. 3 depicts a detailed block diagram of the sensors of the multi-sensor node device of FIG. 2, according to embodiments of the present disclosure.
FIG. 4 depicts a block diagram of energy harvesting techniques of the multi-sensor node device of FIG. 2, according to embodiments of the present disclosure.
FIGs. 5A-5C depict an acoustic sensor energy harvesting apparatus for the multi-sensor node device, according embodiments of the present disclosure.
FIGs. 6A-6C depict an electro-magnetic energy harvesting apparatus for the multi-sensor node device of FIG. 2, according to embodiments of the present disclosure.
FIGs. 7A-7B depict a piezo-electric energy harvesting apparatus for the multi-sensor node device of FIG. 2, according to embodiments of the present disclosure.
FIGs. 8-10 depict combined energy harvesting techniques for the multi-sensor node device of FIG. 2, according to one or more embodiments of the present disclosure.
FIG. 11 depicts a flowchart of a method for determining a health indication of a mechanical component of a vehicle, according to embodiments of the present disclosure.
FIG. 12 depicts a high-level functional block diagram of an exemplary computer device or system, in which embodiments of the present disclosure, or portions thereof, may be implemented.

### DETAILED DESCRIPTION

The following embodiments describe systems and methods for determining a health indication of a mechanical component of a vehicle. As described above, there is a need to proactively predict and determine a health indication to predict maintenance of mechanical components of a vehicle. In general, the present disclosure is directed to a multi-sensor node device having a plurality of different sensors therein. For example, the plurality of sensors may include accelerometers, temperature sensors, pressure sensors, humidity sensors, magnetometers, infrared (IR) cameras or devices, speed sensors, electric field sensors, electro-magnetic interference sensors, ultrasound sensors, sound sensors, or any other sensor known in the art for detecting operating conditions associated with mechanical components of a vehicle. The multi-sensor node device may include a micro-controller for performing data acquisition from the various sensors and may store the data in a memory of the node device. Thus, node device may be configured to collect one or more parameters associated with a respective mechanical component.

The node device may be configured to activate only a subset of the sensors of the device based on the type of mechanical component on which the device is being mounted. For example, if the node device is mounted on an auxiliary power unit (APU) of an aircraft, the node device can activate sensors for monitoring vibrations, ultrasound, sound, speed of the rotor, voltage/current, and EMI information. If the node device is mounted on an engine subsystem, the node device can activate sensors for monitoring vibration, ultrasound, and sound for engine subsystems. If the node device is mounted on an engine generator, the node device can activate sensors for monitoring vibration, sound, voltage/current, and EMI information for engine generators. If the node device is mounted on a starter system, the node device can activate sensors for monitoring vibration, ultrasound, acoustic, and gear speed of the starter. If the node device is mounted to or in association with valves and/or actuators, the node device can activate sensors for monitoring vibration, ultrasound, sound, and electro-magnetic fields. If the node device is mounted on a landing gear system, the node device can activate sensors for monitoring vibration and sound. Thus, node device may be configured to activate a subset of the sensors based on an application of the node device. In this way, only the relative sensors for a respective application are activated and draw power from the power module. The other remaining sensor may remain inactive.

The micro-controller can run respective algorithms and perform basic anomaly detection. For example, the micro-controller may run edge artificial intelligence analytics and perform edge inferencing to predict a health indication of the respective mechanical component. The node device may include a wired or wireless communication module (e.g., controller, modem, antenna, etc.) built into the device or as a separate unit. The raw data or inference may be transmitted to a handheld device (e.g., a mobile application) or to the cloud through the wired or wireless communication interface for further learning or deep analysis.

The general health indication of a mechanical component can be determined by monitoring parameters such as temperature, vibration, acoustics, EMI emissions, etc. The mechanical components of the vehicle may show abnormalities in the profiles of the monitored parameters when the components begin to deteriorate or when the components are about to fail in the near future. The node device enables monitoring these parameters to enable scheduling of maintenance activities of the mechanical components. Each mechanical component of a vehicle may include different profiles of the monitored parameters and different causes of failure. Presently existing solutions are condition based and tailored solution based on only one of the monitored parameters. The node device may enable monitoring multiple parameters in a single device simultaneously and continuously and, thus may enable more accurate health prediction. The monitored parameters by the node device may be used for edge analytics or AI inferencing and/or may be communicated to a cloud device, as detailed above.

The node device enables retrofitting and may be easily mountable on a surface of a respective mechanical component on to which PHM is to be performed. In this way, the node device may determine a health indication of the mechanical component and proactive maintenance may be performed or scheduled. Further, utilizing multiple sensors to determine the health indication of the component may provide for a more accurate prediction and indication of the health. Accordingly, the mechanical components may remain on the vehicle without being replaced if they have remaining useful life and unnecessary down time of the vehicle may be avoided. Advantages of such a node device for health monitoring and maintenance may include detecting early-stage failure, extending life of the mechanical component or its parts by avoiding early replacements, reducing unplanned downtime, and/or maintenance being performed only when required improves operation efficiency.

Aspects of the disclosure may also provide for energy harvesting within the node device. For example, the node device may include one or more devices for harnessing physically available energy associated with the mechanical component (e.g., vibration, temperature, solar energy, rotational energy, etc.). The node device may convert the energy into electrical form, store the electrical energy, and use the electric energy to power the electronics (e.g., the micro-controller and/or the sensors) for specific applications. Thus, the node device does not require power supply from the vehicle subsystems which reduces validation and certification cost and time in aircraft applications.

The node device of the present disclosure may provide for a multi-sensor fusion algorithm (e.g., based on combination of all or some of temperature, humidity, vibration, conducted/air coupled acoustic, ultrasound, EMI, electric field, magnetic field, thermal imaging, and speed monitoring, etc.) based on PHM which may lead to higher accuracy in inferencing. The node device may provide for a unique power management system, as detailed above and below to operate the device at lowest harvested power. For example, the node device may operate in a low power or sleep mode until it is awoken by a trigger. In the low power mode, only a single sensor may be active to sense a parameter and when the sensed parameter exceeds a threshold, the node device may wake and active the necessary or configured sensors for collecting data.

Thus, the node device of the present disclosure may provide for a common edge device for multiple types of applications (e.g., can be used and configured for use on different types of mechanical components of a vehicle). The node device may include wireless connectivity such that the node device may include a smart IoT node. Further, the node device may be energy harvesting based, include a retrofit module, directly mounted on the component, and therefore does not interfere with aircraft subsystems. Such a device may enable minimal validation and certification process cost and time associated with aircraft subsystems.

The subject matter of the present description will now be described more fully hereinafter with reference to the accompanying drawings, which form a part thereof, and which show, by way of illustration, specific exemplary embodiments. An embodiment or implementation described herein as "exemplary" is not to be construed as preferred or advantageous, for example, over other embodiments or implementations; rather, it is intended to reflect or indicate that the embodiment(s) is/are "example" embodiment(s). Subject matter can be embodied in a variety of different forms and, therefore, covered or claimed subject matter is intended to be construed as not being limited to any exemplary embodiments set forth herein; exemplary embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware, or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in one embodiment" as used herein does not necessarily refer to the same embodiment and the phrase "in another embodiment" as used herein does not necessarily refer to a different embodiment. It is intended, for example, that claimed subject matter include combinations of exemplary embodiments in whole or in part.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. Both the foregoing general description and the following detailed description are exemplary and explanatory only and are not restrictive of the features, as claimed.

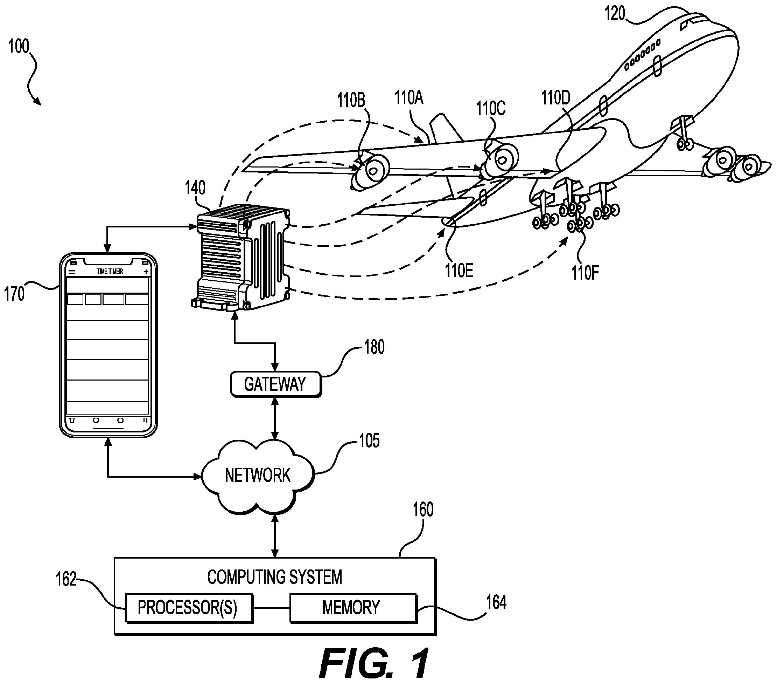

Referring now to the appended drawings, FIG. 1 depicts a system diagram of a system 100 for determining a health indication of a mechanical component 110a-110f of a vehicle 120, according to one or more embodiments. As shown in FIG. 1, system 100 may include a vehicle 120, a multi-sensor node device 140, and a computing system 160. Vehicle 120 may be any type of vehicle having one or more mechanical systems or components 110a-110f. While the exemplary embodiment describes vehicle 120 as an aircraft, it is understood that vehicle 120 may include any type of vehicle, such as, for example, it is understood that vehicle 120 may include spacecraft, motor vehicles (e.g., motorcycles, cars, trucks, buses, etc.), railed vehicles (e.g., trains, trams, etc.), watercraft (e.g., ships, boats, submarines, etc.), amphibious vehicles (e.g., hovercraft, screw-propelled vehicles, etc.), and/or any other type of vehicle. Mechanical components 110a-110f of vehicle 120 may include for example, structural components 110a, starter system components 110b, engine system components 110c, valves and actuators 110d, auxiliary power unit components 110e, landing gear components 110f, and/or any other mechanical components of vehicle 120.

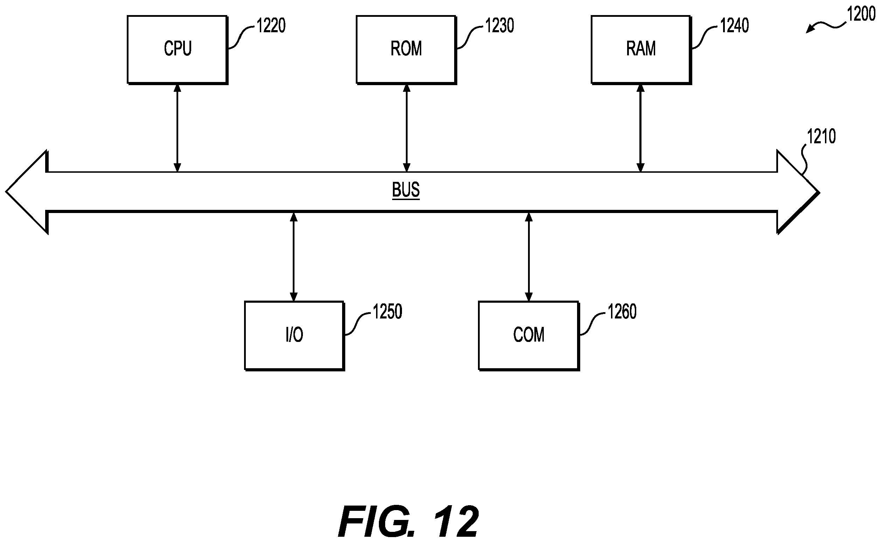

As detailed below, multi-sensor node device 140 may be in communication with computing system 160 via a network 105. Network 105 may be any suitable network or combination of networks and may support any appropriate protocol suitable for communication of data to and from the multi-sensor node device and/or the computing system 160 and between various other components in the system 100. Network 105 may include a public network (e.g., the Internet), a private network (e.g., a network within an organization), or a combination of public and/or private networks. Network 105 may be configured to provide communication between various components depicted in FIG. 1. Network 105 may comprise one or more networks that connect devices and/or components in the network layout to allow communication between the devices and/or components. For example, network 105 may include the Internet, a wireless network, a wired network (e.g., Ethernet), satellite communication, ground-based very high frequency (VHF) datalinks, Wi-Fi, long term evolution (LTE), cellular (e.g., 4G, 5G, or the like), Bluetooth, Near Field Communication (NFC), a local area network (LAN), a Wide Area Network (WANs), or any other communications network that provides communications between one or more components of the network layout. Computing system 160 may include one or more remote servers. The servers may include cloud-based servers executed in a cloud computing environment and/or may include any other type of physical servers, virtual servers, or remote servers. As used herein, remote servers are servers located and/or executed offboard from vehicle 120. Computing system 160 may include computing systems, such as system 1200 described with respect to FIG. 12. As such, computing system 160 may include one or more processors 162 and a memory 164 for storing and executing applications or software modules of system 100.

Computer system 160 may further include one or more modules, models, engines, or databases, including an algorithm model (e.g., an artificial intelligence algorithm and/or trained machine learning algorithm), which may be software components stored in/by the computer system 160 (e.g., stored on the memory). The computer system 160 may be configured to utilize the one or more modules, models, engines, or databases when performing various methods described in this disclosure. In some embodiments, computer system 160 may have a cloud computing platform with scalable resources for computation and/or data storage, and may run one or more applications on the cloud computing platform to perform various computer-implemented methods described in this disclosure. In some embodiments, some of the modules, models, engines, or databases may be combined to form fewer modules, models, engines, or databases. In some embodiments, some of the modules, models, engines, or databases may be separated into separate, more numerous modules, models, engines, or databases. In some embodiments, some of the modules, models, engines, or databases may be removed while others may be added.

Computer system 160 may be configured to receive data from other components (e.g., a mobile computing device 170 and/or multi-sensor node device 140) of system 100 via network 105. Computer system 160 may further be configured to utilize the received data by inputting the received data into the algorithm model to produce a result (e.g., health indicator of a mechanical component 110a-110f of vehicle 120). Information indicating the result may be transmitted to mobile computing device 170 or another device over network 105. In some embodiments, the computer system 160 may be referred to as a server system that provides a service including providing the information indicating the received data and/or the result to the mobile computing device 170. Computer system 160 may be part of an entity, which may include any type of company, organization, or institution that implements one or more applications.

Multi-sensor node device 140 may also be in communication with a mobile computing device 170 and/or a gateway 180. Mobile computing device 170 and/or gateway 180 may be in communication with computing system 160 via network 105. In this way, multi-sensor node device 140 may communicate with computing system 160 directly (e.g., via wireless means) and/or through mobile computing device 170 and/or gateway 180, as detailed further below. The mobile computing device 170 may be a computer system that is operated by a user, such as a mobile device (e.g., smartphone, tablet, pager, personal digital assistant (PDA)), a computer (e.g., laptop computer, desktop computer, server), or a wearable device (e.g., smart watch). Mobile computing device 170 can also include any other media content player, for example, a set-top box, a television set, a video game system, or any electronic device capable of providing or rendering data. Mobile computing device 170 may optionally be portable and/or may be handheld. Mobile computing device 170 may include a computing system 1200 including a memory, one or more processors, communication interfaces, input devices, and output devices, as detailed further below with reference to FIG. 12. It is understood that mobile computing device 170 may include one or more computing devices accessed by one or more users. For example, a first user may use a first mobile computing device 170 and a second user may use a second mobile computing device 170.

Mobile computing device 170 may include one or more communication interfaces. The communication interface may include one or more cellular radios, Bluetooth, WiFi, near-field communication radios, or other appropriate communication devices for transmitting and receiving information. Accordingly, the communication interface facilitates communication between mobile computing device 170 and multi-sensor node device 140 and/or between mobile computing device 170 and network 105. Communication may be achieved with multi-sensor node device 140 and/or network 105 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

Mobile computing device 170 may operate a client program, also referred to as a user application or third-party application, used to communicate with the multi-sensor node device 140 and/or with network 105 (e.g., the cloud). The user application may be used to provide information (e.g., sensor configurations, etc.) to the multi-sensor node device 140 and to receive information (e.g., health indicator of a mechanical component 110a-110f of vehicle 120) from the multi-sensor node device 140. The user application may include a mobile application or other application that is run on mobile computing device 170. In some examples, the user application may include a web-based application accessed through a web browser of mobile computing device 170 via network 105.

Multi-sensor node device 140 may include a plurality of sensors and one or more processors configured to configure a subset of the plurality of sensors based on an application of the multi-sensor node device 140, as detailed further below.

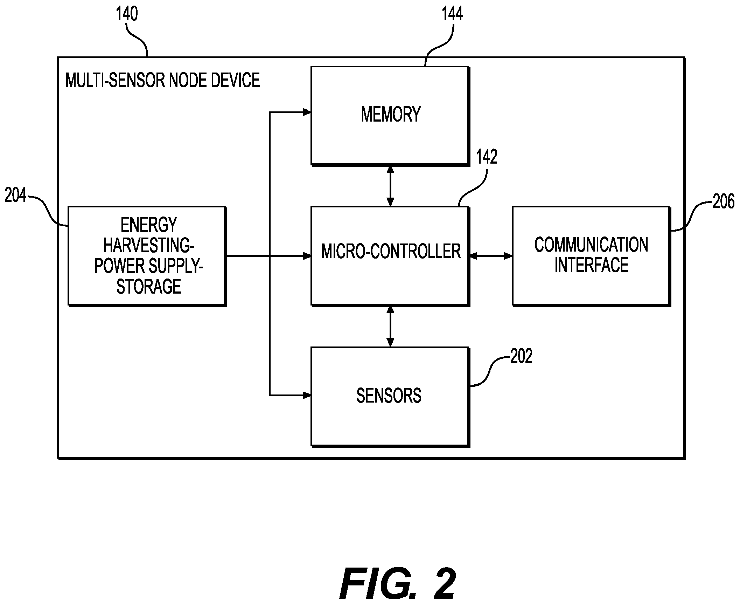

FIG. 2 depicts a block diagram of a multi-sensor node device 140 of system 100, according to embodiments of the present disclosure. Multi-sensor node device 140 may include a computing system, such as system 100 described with respect to FIG. 1. As such, multi-sensor node device 140 may include one or more processors, such as a micro-controller 142, and a memory 144 for storing and executing applications or software modules of system 100.

As shown in FIG. 2, multi-sensor node device 140 may also include a plurality of sensors 202, an energy harvesting and power supply storage module 204, and one or more communication interfaces 206. Each of the plurality of sensors 202 may measure, or otherwise monitor, a plurality of parameters associated with a mechanical component 110a-110f of vehicle 120, as detailed further below. Micro-controller 142 may receive the measured or monitored parameters from each of the plurality of sensors 202. Accordingly, multi-sensor node device 140 may be include a device having multiple sensors.

The energy harvesting and power supply storage module 204 may include one or more modules, such as one or more energy harvesting devices and/or one or more energy storage devices, as detailed further below. Accordingly, multi-sensor node device 140 may harvest and store energy from a plurality of sources, such as, for example, vibrational energy sources, rotational energy sources, photo-electric energy sources, thermal energy sources, acoustic energy sources, or any other type of energy source known in the art.

The communication interfaces 206 may include one or more cellular radios, Bluetooth, LoRa, WiFi, near-field communication radios, or other appropriate communication devices for transmitting and receiving information. Accordingly, the communication interfaces 206 facilitate communication between multi-sensor node device 140 and mobile computing device 170 or gateway 180 and/or between multi-sensor node device 140 and network 105. Communication may be achieved with mobile computing device 170, gateway 180, and/or network 105 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

Multi-sensor node device 140 may further include one or more modules, models, engines, or databases, including an algorithm model (e.g., an artificial intelligence algorithm and/or trained machine learning algorithm), which may be software components stored in/by the multi-sensor node device 140 (e.g., stored on the memory 144). The multi-sensor node device 140 may be configured to utilize the one or more modules, models, engines, or databases when performing various methods described in this disclosure. In some embodiments, multi-sensor node device 140 may have a cloud computing platform with scalable resources for computation and/or data storage, and may run one or more applications on the cloud computing platform to perform various computer-implemented methods described in this disclosure. In some embodiments, some of the modules, models, engines, or databases may be combined to form fewer modules, models, engines, or databases. In some embodiments, some of the modules, models, engines, or databases may be separated into separate, more numerous modules, models, engines, or databases. In some embodiments, some of the modules, models, engines, or databases may be removed while others may be added.

Multi-sensor node device 140 may be configured to receive data from other components (e.g., a mobile computing device 170 and/or computing device 160) of system 100 via network 105. Multi-sensor node device 140 may further be configured to utilize the received data by inputting the received data into the algorithm model to produce a result (e.g., health indicator of a mechanical component 110a-110f of vehicle 120). Information indicating the result may be transmitted to mobile computing device 170 or another device directly or over network 105. In some embodiments, the multi-sensor node device 140 may be referred to as an edge device that provides a service including edge computing and providing the information indicating the received data and/or the result to the mobile computing device 170 and/or computing device 160.

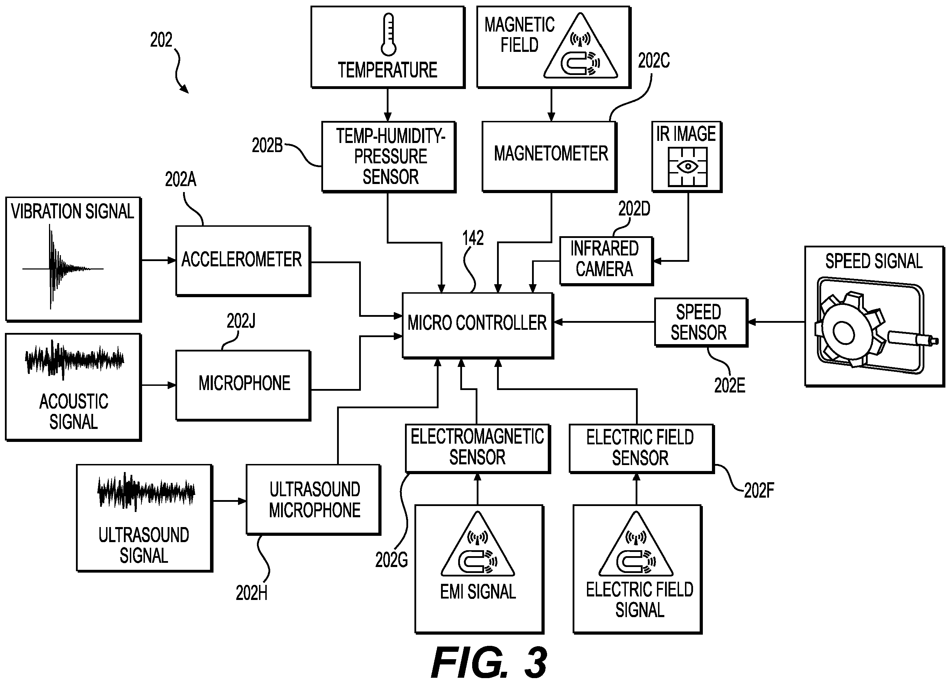

FIG. 3 depicts a detailed block diagram of the plurality of sensors 202 of the multi-sensor node device 140, according to embodiments of the present disclosure. As shown in FIG. 3, the plurality of sensors 202 may include an accelerometer 202a, a temperature/humidity/pressure sensor 202b, a magnetometer 202c, an infrared camera 202d, a speed sensor 202e, an electric field sensor 202f, an electromagnetic interference sensor 202g, an ultrasound microphone 202h, and an audio microphone 202j. Thus, the plurality of sensors 202 may include a plurality of different sensors for sensing or measuring operating conditions of a mechanical component. While the exemplary embodiment depicts only one of each type of sensor 202a-202j, it is understood that the plurality of sensors 202 may include a plurality of each of the different types of sensors 202a-202j. Further, the plurality of sensors 202 may include any number and/or type of sensor as desired.

Accelerometer 202a may include one or more sensors for measuring acceleration and/or vibration of an object. Accelerometer 202a may include any type of accelerometer or vibration sensor. Accordingly, accelerometer 202a may receive a vibration signal generated by a respective mechanical component 110a-110f. For example, the accelerometer 202a may measure vibration of a rotating machine (e.g., air turbine starter of a starter system 110b). Accelerometer 202a may be interfaced to micro-controller 142 through standard digital or analog interfaces.

Temperature/humidity/pressure sensor 202b may include one or more sensors for sensing or measuring temperature, humidity, and/or pressure (e.g., barometric pressure) associated with a mechanical component 110a-110f. For example, sensor 202b may include a temperature sensor, a humidity sensor, and/or a pressure sensor. Such a sensor 202b may include sensors for sensing temperature, humidity, and/or pressure in a single device. Sensor 202b may also include one or more separate sensors, e.g., a separate temperature sensor, a separate humidity sensor, and/or a separate pressure sensor, such that sensor 202b may include a plurality of sensors 202b. Sensor 202b may be interfaced to micro-controller 142 through standard digital or analog interfaces.

Magnetometer 202c may include one or more sensors for sensing or measuring magnetic field or magnetic dipole moment. For example, magnetometer 202c may measure a direction, strength, or relative change of a magnetic field at a particular location. For example, magnetometer 202c may measure a magnetic field or dipole moment associated with a mechanical component 110a-110f (e.g., motors, generators, and/or valves). Magnetometer 202c may be interfaced to micro-controller 142 through standard digital or analog interfaces.

Infrared camera 202d may include one or more cameras or sensors for sensing or otherwise capturing thermal images. For example, such a camera 202d may include an image sensor that is sensitive to infrared (IR) light (e.g., wavelengths from about 1,000nm to about 14,000 nm). Accordingly, infrared camera 202d may sense, measure, or capture infrared radiation emitted from an object and create an IR image. For example, infrared camera 202d may sense infrared or thermal radiation associated with a rotating mechanical component 110a-110f and generate an IR image of the mechanical component 110a-110f. Infrared camera 202d may be interfaced to micro-controller 142 through standard digital or analog interfaces.

Speed sensor 202e may include one or more sensors for sensing values indicative of a speed of a rotary component associated with a mechanical component 110a-1 10f. For example, speed sensor 202e may sense a gear speed of an air turbine of the starter system 110b. Accordingly, speed sensor 202e may receive a speed signal indicative of a speed of the rotary component. Speed sensor 202e may include any type of speed sensor, such as, for example, hall effect speed sensors, variable reluctance speed sensors, eddy current speed sensors, amplified speed sensors, or any other type of speed sensor known in the art. Speed sensor 202e may be interfaced to micro-controller 142 through standard digital or analog interfaces.

Electric field sensor 202f may include one or more sensors for sensing or otherwise detecting an electric field. For example, electric field sensor 202f may detect an electric field associated with a mechanical and or electro-mechanical component 110a-110f (e.g., motors and/or generators). Electric field sensor 202f may include any type of sensor for detecting an electric field, such as probes-based Faraday Effect sensors, electric-optic crystal sensors, piezoelectric materials sensors, and/or electrostatic attraction sensors. Such sensors 202f may detect partially conducting or conducting objects. Electric field sensor 202f may be interfaced to micro-controller 142 through standard digital or analog interfaces.

Electromagnetic interference (EMI) sensor 202g may include one or more sensors for sensing or otherwise detecting electromagnetic interference (EMI), or radiofrequency interference (RFI). Accordingly, electromagnetic interference sensor 202g may detect a disturbance generated by an external source (e.g., a mechanical component 110a-1 10f) that affects an electrical circuit by electromagnetic induction, electrostatic coupling, and/or conduction. EMI sensor 202g may include any type of sensor for detecting EMI, such as, for example, inductive coil, or any other type of sensor known in the art. EMI sensor 202g may also include signal processing by microcontroller 142 to determine EMI associated with a mechanical component 110a-110f. EMI sensor 202g may be interfaced to micro-controller 142 through standard digital or analog interfaces.

Ultrasound microphone 202h one or more sensors or devices for sensing or otherwise detecting ultrasound produced by or otherwise associated with a mechanical component 110a-110f. For example, ultrasound microphone 202h may acquire ultrasound data of lubrication faults that are of high frequency sounds in moving mechanical components 110a-110f. Ultrasound microphone 202h may be interfaced to micro-controller 142 through standard digital or analog interfaces. Ultrasound microphone 202h may include a transducer that converts ultrasound into an electrical signal. As used herein, ultrasounds are sounds that occur above the range of human hearing (e.g., above 20 kHz). Ultrasound microphone 202h may include any type of device for detecting ultrasounds.

Audio microphone 202j may include one or more sensors or devices for sensing or otherwise detecting sound produced by or otherwise associated with a mechanical component 110a-110f. For example, microphone 202j may acquire audio data of moving mechanical components 110a-110f. Microphone 202j may be interfaced to micro-controller 142 through standard digital or analog interfaces. Microphone 202j may include a transducer that converts sound into an electrical signal. Microphone 202j may include any type of transducer, such as, for example, electret, condenser, dynamic, ribbon, carbon, piezoelectric, fiber-optic, laser, liquid, microelectromechanical systems (MEMS), or the like.

It is understood that the plurality of sensors 202 may include any type of sensor such as resistive sensors, inductive sensors, capacitive sensors, piezoelectric sensors, optical sensors, micro electro-mechanical system sensors, or the like. Further, the plurality of sensors 202 may include physical sensors and/or virtual sensors (e.g., sensors that determine a value indirectly by micro-controller 142 based on other sensed values) and may include any number and/or combination of sensors as necessary for sensing or measuring operating conditions of mechanical components 110a-110f.

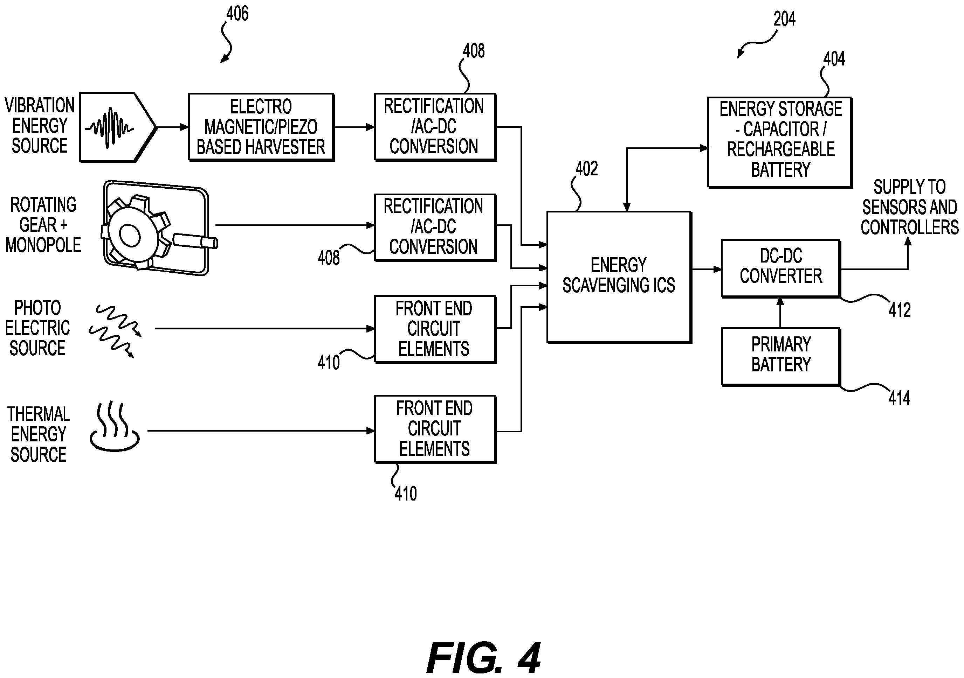

FIG. 4 depicts a block diagram of energy harvesting techniques of the multi-sensor node device 140, according to embodiments of the present disclosure. As shown in FIG. 4, the energy harvesting and power supply storage module 204 may include one or more components or modules for energy harvesting and storage. For example, module 204 may include one or more energy scavenging integrated circuits (ICs) 402 and an energy storage module 404. Accordingly, module 204 may harvest and/or scavenge energy from various physical sources of energy, e.g., vibration, temperature, solar/illumination, rotating gears, or the like, and may convert the harvested energy into electrical form (e.g., for storage in energy storage module 404). Energy storage module 404 may include any type of energy storage device, such as, for example, a battery, a capacitor, a supercapacitor, or the like. Module 204 may include one or more energy harvesting devices 406, one or more energy conversion devices 408, and/or one or more circuit elements 410.

The one or more energy harvesting devices 406 may be configured to harvest energy from an external source, as detailed above. For example, the energy harvesting devices 406 may harvest any type of energy, such as, for example, solar/photo-electric, kinetic energy (e.g., vibrational energy and/or energy from rotating gears), thermal energy, or the like. The energy conversion devices and/or the circuit elements 410 may convert the harvested energy into electrical form and the energy can then be stored in energy storage module 404. The harvested and stored electrical energy may then be supplied from the energy storage module 404 to the plurality of sensors 202, the micro-controller 142, and/or the communication interface 206, as needed, via a DC-DC converter 412. In some embodiments, the module 204 may also include a standard primary battery 414 to provide energy in addition to, or in combination with, the energy harvesting techniques described above, as desired.

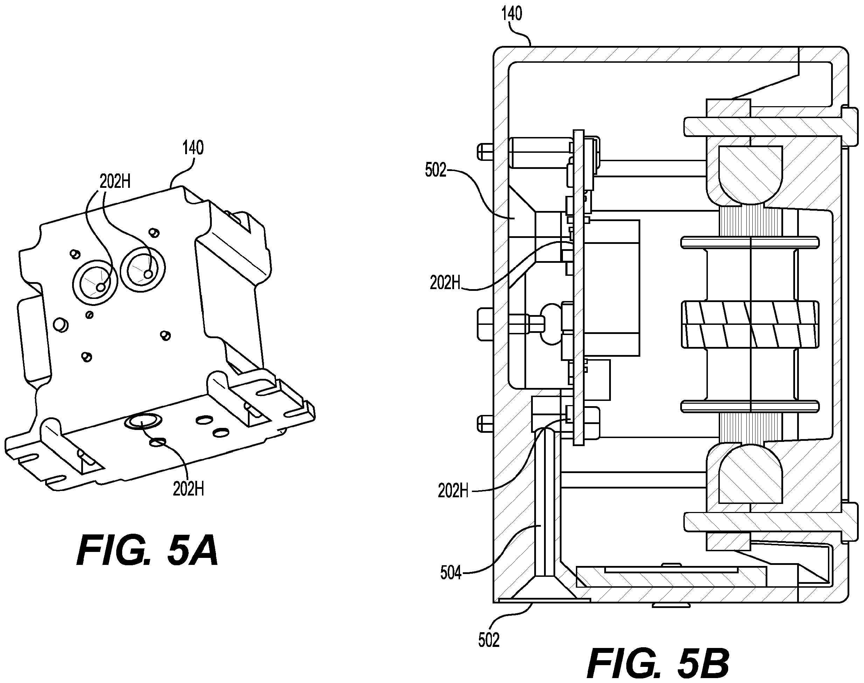

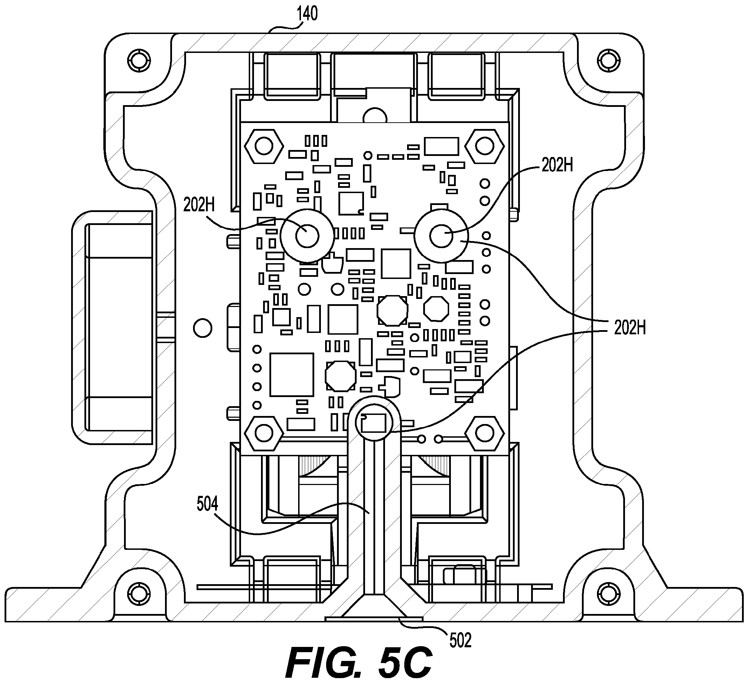

FIGs. 5A-5C depict an acoustic sensor 202h that can pick up audio and/or ultrasonic sound signatures of target object. Acoustic sensor 202h is part of the multi-sensor node device 140, according embodiments of the present disclosure. FIG. 5A is a rear perspective view of the multi-sensor node device 140. FIG. 5B is a cross-sectional side view of the multi-sensor node device 140. FIG. 5C is a cross-sectional rear view of the multi-sensor node device 140. As shown in FIGs. 5A-5C, multi-sensor node device 140 may include one or more acoustic sensors 202h. For example, multi-sensor node device 140 may include one or more sensors 202h located at a rear side of device 140 and one or more sensors 202h located at a bottom side of device 140. As used herein, the bottom side of device 140 may include a side of device 140 that contacts a mechanical component 110a-110f. For example, device 140 may be coupled to mechanical component 1 10a-110f by one or more fasteners (not shown) or the like, and the bottom side may contact the mechanical component 110a-110f when device 140 is coupled. The rear side sensors 202h may be considered air coupled audio and/or ultrasonic acoustic sensors, such that the rear side sensors 202h are configured to sense or otherwise detect audio and/or ultrasound via air (e.g., not in contact with another body or component). The bottom side sensors 202h may be considered surface coupled audio and/or ultrasonic acoustic sensors, such that the bottom side sensors 202h are configured to sense or otherwise detect audio sound and/or ultrasound when coupled or otherwise in contact with another body or component.

As shown in FIGs. 5B and 5C, sensors 202h may include a diaphragm 502 or other thin membrane that moves in reaction to external sound pressure variation. Accordingly, the diaphragm 502 may vibrate in response to sound waves. Diaphragm 502 may include any diaphragm material known in the art. The sound waves may be passed through an acoustic path column 504 and received by the sensors 202h. The sensors 202h may be coupled to or otherwise in communication with micro-controller 142 and may be sealed by one or more sealing gaskets 506. Thus, multi-sensor node device 140 may sense or otherwise detect audio sound and/or ultrasound associated with a mechanical component 110a-110f.

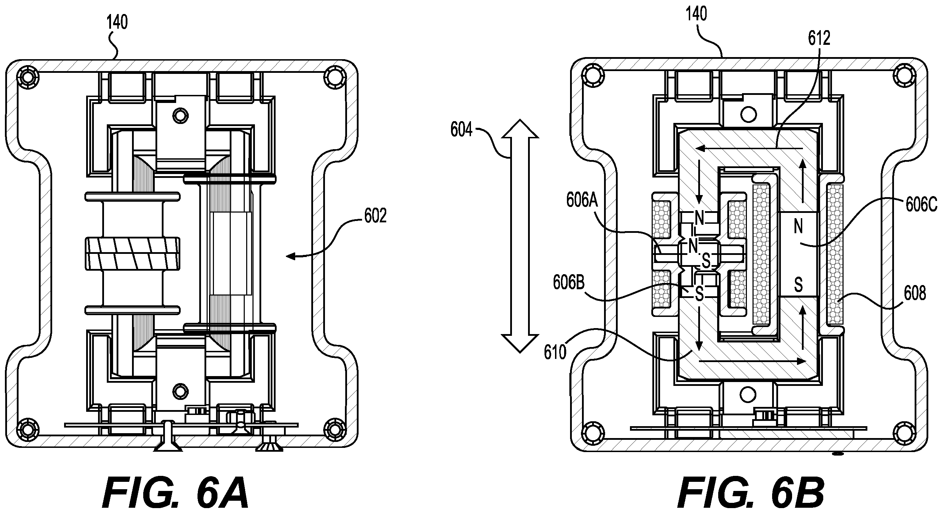

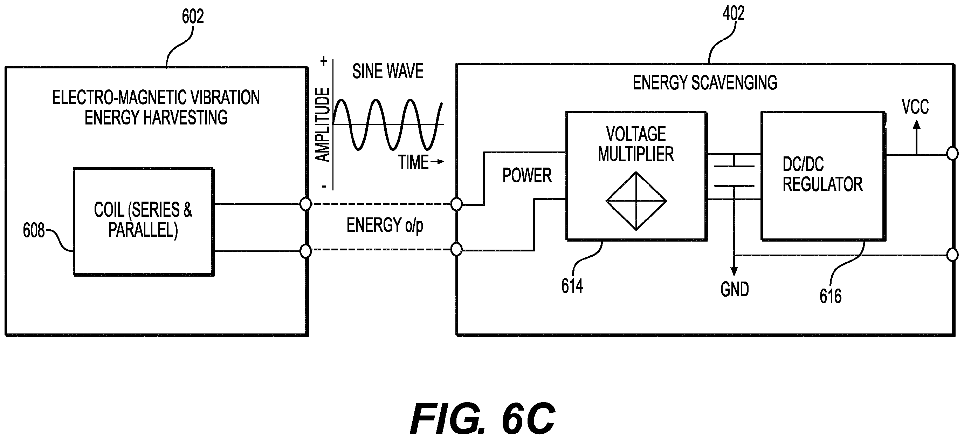

FIGs. 6A-6C depict an electro-magnetic energy harvesting apparatus 602 for the multi-sensor node device 140, according to embodiments of the present disclosure. FIG. 6A is a front cross-sectional view of the multi-sensor node device 140 and FIG. 6B is a schematic view of FIG. 6A. FIG. 6C is a block diagram of the electro-magnetic energy harvesting apparatus 602 and the energy scavenging circuit or ICs 402. As shown in FIGs. 6A and 6B, apparatus 602 may harvest energy in response to vibrations of a mechanical component 110a-110f, e.g., along a vibrational axis 604. For example, when node device 140 is mounted to a mechanical component 110a-110f, and the mechanical component 110a-110f vibrations (e.g., due to internal rotating components), node device 140 may move about vibrational axis 604. To capture or otherwise convert the vibrational energy, apparatus 602 may include one or more magnets 606a-606c surrounded by one or more coils 608. The magnets 606a-606c may include one or more suspension magnets 606a, a levitation magnet 606b, and a biasing magnet 606c. The coils 608 may be wound about a ferrite core 610. Thus, when node device 140 vibrates or otherwise moves about the vibrational axis 604, the suspension magnets 606a may move along the vibrational axis 604 and generate a magnetic flux with respect to the levitation magnets 606b. The magnetic flux may move about the ferrite core 610 and the moving magnetic flux may generate an electric current in the coils 608. Thus, the vibrational energy may be converted to electrical energy and the electric energy may be stored, as detailed above.

As shown in FIG. 6C, the electrical energy from coils 608 may be passed to energy scavenging circuit or ICs 402. The energy scavenging circuit or ICs 402 may include one or more voltage multipliers 614 and one or more DC/DC regulators 616. The voltage multipliers 614 may include an electrical circuit that converts AC power (e.g., the electrical current generated by apparatus 602) from a lower voltage to a higher DC voltage using a network of capacitors and diodes. The DC/DC regulator 616 may include an electrical circuit that converts a source of direct current (DC) from one voltage level to another. Thus, the DC/DC regulators 616 can help ensure consistent voltage levels may be generated and stored by node device 140.

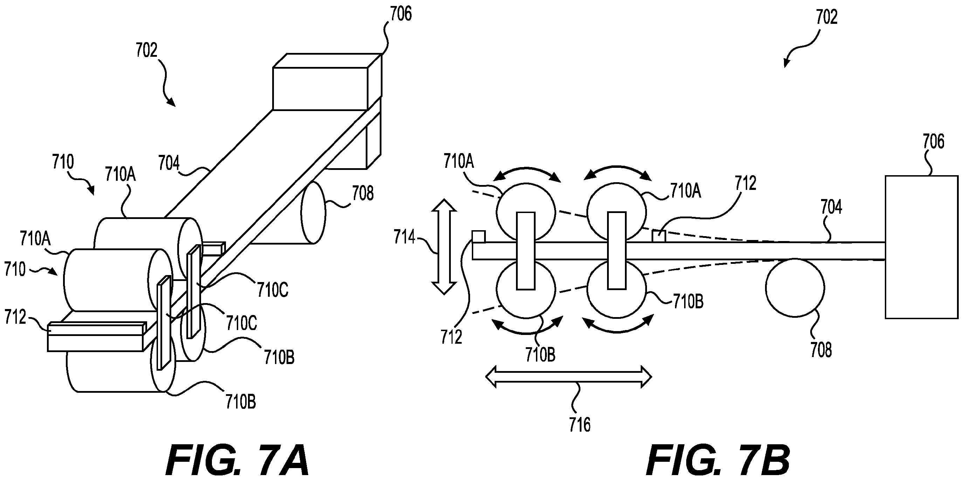

FIGs. 7A and 7B depict a piezo-electric energy harvesting apparatus 702 for the multi-sensor node device 140, according to embodiments of the present disclosure. FIG. 7A is a front perspective view of apparatus 702 and FIG. 7B is a side view of apparatus 702. As shown in FIGs. 7A and 7B, apparatus 702 may include a piezo-electric beam 704 that is supported at one end by a base 706. Thus, apparatus 706 may be considered a cantilever beam. Beam 704 may also be supported by adjustable beam support 708. Beam 704 may include a first end defined at base 706 and a second end opposite the first end. The first end may be attached or otherwise coupled to base 706 and the second end may be considered a free end (e.g., free from attachment to another body). Beam 704 may also include a first side and a second side opposite the first side. The first side may define a top side of beam 704 and the second side may define a bottom side of beam 704.

Adjustable beam support 708 may be moved to tune beam 704 to different coarse vibration frequencies, as desired by varying the stiffness of beam 704 . Apparatus 702 may include one or more mass rollers 710 located at or adjacent the second, free end of beam 704. Mass rollers 710 may include one or more mass structures 710a, 710b coupled together by a support member 710c. Mass structures 710a, 710b may include weighted structures and may include a generally cylindrical or otherwise rounded shape. Mass structure 710a may be located on the first side of beam 704 and mass structure 710b may be located on the second side of beam 704. Accordingly, mass structures 710a, 710b may roll or otherwise rotate or move along a length of beam 704. Beam 704 may also include one or more stoppers 712 that may stop movement of mass rollers 710.

With reference to FIG. 7B, node device 140 may vibrate or otherwise move along a vibrational axis 714 due to vibrations associated with a mechanical component 110a-110f. Such movement of node device 140 may cause vibration or movement of beam 704 along vibrational axis 714. Thus, piezo-electric beam 704 may generate electrical energy due to the vibration of beam 704. As beam 704 vibrates, mass rollers 710 may move along a horizontal axis 716 of beam 704. Thus, mass rollers 710 may automatically tune beam 704 to a desired or optimum fine vibrational frequency.

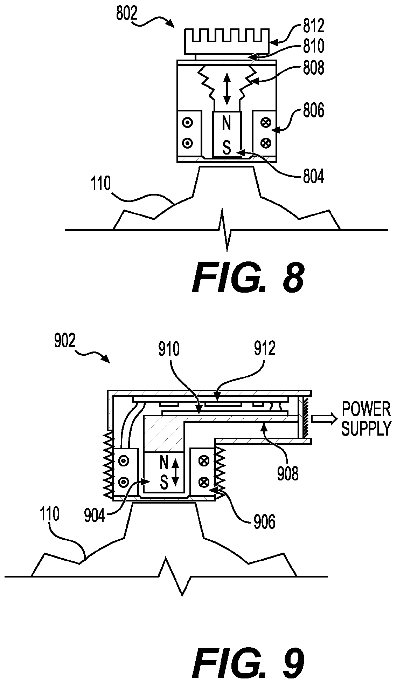

FIGs. 8-10 depict different embodiments of combined energy harvesting apparatuses 802, 902, 1002 for the multi-sensor node device 140. As used herein, a combined energy harvesting apparatus is an apparatus that uses multiple principles of energy harvesting in a single apparatus or device.

FIG. 8 depicts a combined energy harvesting apparatus 802, according to a first embodiment. The combined energy harvesting apparatus 802 may include a combination of harvesting energy from thermal sources, vibrational sources, and rotational motion sources. Accordingly, apparatus 802 may include thermal energy harvesting components and may also include electro-magnetic components and piezo-electric components, as detailed above. Apparatus may include a magnet 804 surrounded by one or more coils 806, similarly as described above. The mass magnet 804 may be supported by a bellow spring piezo film 808 and the film 808 may be coupled or otherwise attached to the apparatus 802. Thus, mass magnet 804 may hang freely, or otherwise be suspended, from bellow spring piezo film 808 between coils 806. Apparatus 802 may also include a thermo-electric generator 810. Thermo-electric generator 810 may convert heat flux (e.g., temperature differences) directly into electrical energy. Apparatus 802 may also include a heat sink 812 for regulating or otherwise dissipated excess heat away from apparatus 802 (e.g., to ambient air), thereby creating temperature difference between the hot and cold plates of the thermo-electric generator 810.

In operation, apparatus 802 may harvest energy in a plurality of techniques. For example, apparatus 802 may harvest vibrational energy via bellow spring piezo film 808 when apparatus 802 vibrates due to vibrations of mechanical component 110a-110f. For example, bellow spring piezo film 808 may move, or otherwise oscillate, along a vibrational axis (as shown by the double-sided arrows in FIG. 8), and may convert the vibrational energy into electrical energy. At the same time, mass magnet 804 (e.g., suspended from bellow spring piezo film 808) may move along with bellow spring piezo film 808. Movement of mass magnet 804 within coil 806 may generate an electric current in coil 806, as detailed above.

Further, apparatus 802 may harvest kinetic energy (e.g., rotational energy) when a rotating component moves past apparatus 802. For example, when a gear (e.g., of a mechanical component 110) rotates, mass magnet 804 may oscillate along the vibration axis as the gear teeth move closer and further away from mass magnet 804. The oscillation of mass magnet 804 (e.g., due to the rotational energy and/or due to the vibrational energy) may cause magnetic flux that generates an electric current in coil 806, as detailed above. At the same time, piezo film 808 may also oscillate along the vibrational axis due to the movement of mass magnet 804, and bellow spring piezo film 808 may generate the energy by oscillation of the bellow spring piezo film 808, as detailed above. Therefore, apparatus 802 may harvest energy from thermal sources (e.g., heat), vibrational sources (e.g., vibration of mechanical component 110a-110f), and/or rotational sources (e.g., rotation of a gear) in three different ways.

FIG. 9 depicts a combined energy harvesting apparatus 902, according to a second embodiment. The combined energy harvesting apparatus 902 may include a combination of harvesting energy from vibrational sources and rotational motion sources. Accordingly, apparatus 902 may include electro-magnetic components and piezo-electric components, as described above. Apparatus may include a mass magnet 904 surrounded by one or more coils 906, similarly as described above. The mass magnet 904 may be supported by a piezo-electric beam 908 and the beam 908 may be attached or otherwise coupled to a support within apparatus 902. Beam 908 may include a piezo film 910, as detailed above. Apparatus 902 may also include a circuit board 912 to which the coils 906 and the piezo film 910 are connected or otherwise in communication. In this way, the electrical energy generated by coils 910 and piezo film 910 may be transferred to circuit board 912, and the electrical energy may then be communicated to the power supply (e.g., energy storage module 404).

In operation, apparatus 902 may harvest energy by a plurality of techniques. For example, apparatus 902 may harvest vibrational energy via piezo film 910 mounted on beam 908 when apparatus 902 vibrates due to vibrations of mechanical component 110a-110f. For example, beam 908 may vibrate or otherwise oscillate along a vibrational axis (as shown by the double-sided arrows in FIG. 9), and piezo film 910 may convert the vibrational energy into electrical energy, as detailed above. At the same time, mass magnet 904 (e.g., suspended from beam 908) may move along with beam 908. Movement of mass magnet 904 within coil 906 may generate an electric current in coil 906, as detailed above.

Further, apparatus 902 may harvest kinetic energy (e.g., rotational energy) when a rotating component moves past apparatus 902. For example, when a gear (e.g., of a mechanical component 110) rotates, mass magnet 904 may move along the vibration axis as the gear teeth move closer and further away from mass magnet 904. The movement of mass magnet 904 (e.g., due to the rotational energy and/or due to the vibrational energy) may cause magnetic flux that generates an electric current in coil 906, as detailed above. At the same time, beam 908 may also oscillate along the vibrational axis due to the movement of mass magnet 904, and piezo film 910 may generate energy because of the vibrational of beam 908, as detailed above. Therefore, apparatus 902 may harvest energy from vibrational sources (e.g., vibration of mechanical component 110a-110f) and/or rotational sources (e.g., rotation of a gear) in two different ways.

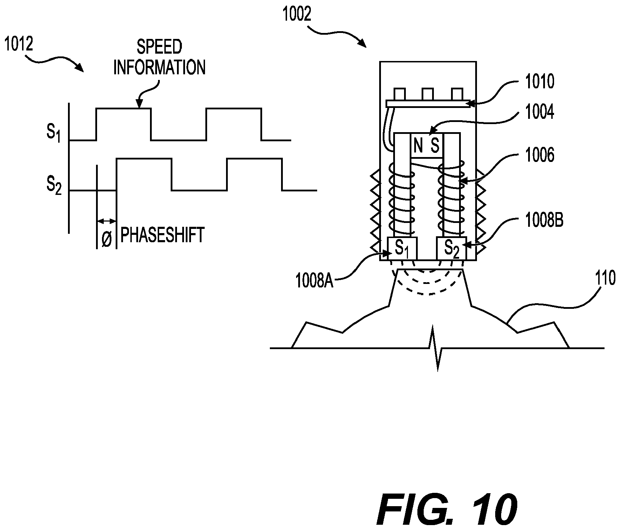

FIG. 10 depicts a combined energy harvesting and rotational speed sensing apparatus 1002, according to a third embodiment. The combined energy harvesting and rotational speed sensing apparatus 1002 may include harvesting energy from rotational motion sources. Accordingly, apparatus 1002 may include electro-magnetic components, as described above. Apparatus may include a biasing magnet 1004 coupled with a ferrite core surrounded by one or more coils 1006, similarly as described above. Apparatus 1002 may also include one or more speed sensors 1008a, 1008b. Speed sensors 1008a, 1008b may include any type of speed sensor including, for example, Hall Effect sensors, Anisotropic Magneto-Resistive (AMR) sensors, or the like. Speed sensors 1008a, 1008b may be located at an end of the ferrite core opposite biasing magnet 1004. In this way, biasing magnet 1004 may be attached to the ferrite core and speed sensors 1008a, 1008b may be attached inside apparatus 1002 on a bottom surface. Apparatus 1002 may also include a circuit board 1010 to which the coils 1006 and the ferrite core are connected or otherwise in communication. In this way, the electrical energy generated by coils 1006 may be transferred to circuit board 1010, and the electrical energy may then be communicated to the power supply (e.g., energy storage module 404).

In operation, apparatus 1002 may harvest kinetic energy (e.g., rotational energy) when a rotating component moves past apparatus 1002. For example, when a gear (e.g., of a mechanical component 110) rotates, magnetic flux may be generated as the gear teeth move towards and away from apparatus 1002. The magnetic flux may move about the ferrite core and may generated an electric current in coils 1006, as detailed above. At the same time, speed sensors 1008a, 1008b may sense or otherwise detect a speed of the rotating component as the rotating component moves past speed sensors 1008a, 1008b. Micro-controller 142 may also determine a direction of rotation of the rotating component based on the speed information detected by speed sensors 1008a, 1008b. For example, if speed sensor 1008a detects speed information before speed sensor 1008b, micro-controller 142 may determine that the rotating component is moving in a clockwise direction. Thus, apparatus 1002 may be considered a combined energy harvesting device and sensor device.

It is understood that combined energy harvesting apparatuses 802, 902, 1002 may include any combination of energy harvesting devices and any number of energy harvesting devices and/or sensors. Further, apparatuses 802, 902, 1002 may be included in multi-sensor node device 140.

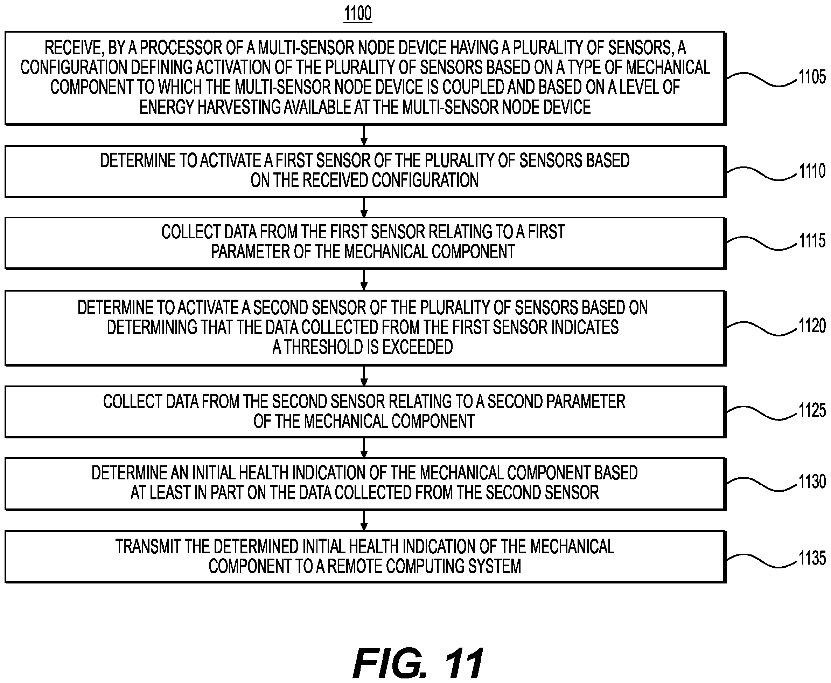

FIG. 11 depicts a flowchart of a method 1100 for determining a health indication of a mechanical component 110a-110f. In an initial step 1105, one or more processors (e.g., micro-controller 142) of multi-sensor node device 140 may receive a configuration of the multi-sensor node device 140. The configuration may define activation of the plurality of sensors 140 based on a type of mechanical component 1 10a-110f on which the multi-sensor node device 140 is coupled and based on a level of energy harvesting available at the multi-sensor node device 140. For example, the configuration may be received from a mobile computing device 170 or from computing system 160. A user may use an application on mobile computing device 170 to indicate a type of mechanical component 110a-110f on which the multi-sensor node device 140 will be mounted. For example, if the node device 140 will be mounted on an air turbine starter system, micro-controller 142 may receive an indication as such.

Based on the application of node device 140 on the air turbine starter system, micro-controller 142 may automatically configure only the subset of sensors 202 needed to monitor conditions of the air turbine starter system. For example, the configuration may indicate that node device 140 should activate only the accelerometer 202a to monitor vibrations, the microphones 202h, 202j to monitor sound, the temperature sensor 202b to monitor surface temperature, and the speed sensors 202e to monitor speed of rotating components of the air turbine starter system. The other sensors of the node device 140 may remain inactive as they may not be needed or applicable for monitoring conditions of an air turbine starter system. In this way, only a subset of the plurality of sensors 202 of node device 140 may be configured to collect data for a respective application of node device 140 based on the received configuration. Thus, the user may indicate through the mobile computing device 170 that the node device 140 will be mounted on a respective type of mechanical component 110a-110f, and micro-controller 142 may automatically configure the subset of the plurality of sensors 202 that are relevant for the respective type of mechanical component 110a-110f.

In step 1110, micro-controller 142 may determine to activate a first sensor 202 of the plurality of sensors 202 based on the received configuration. For example, micro-controller 142 may activate an accelerometer 202a of the multi-sensor node device 140 while the other remaining sensors 202 remain inactive or otherwise in a low power, or sleep, mode.

In step 1115, micro-controller 142 may collect data from the first sensor 202 relating a first parameter of the mechanical component 110a-110f. For example, the first parameter may include a vibrational signal sensed by accelerometer 202a.

In step 1120, micro-controller 142 may determine to activate a second sensor 202 of the plurality of sensors 202 based on determined that the data collected from the first sensor 202 indicates a threshold is exceeded. For example, micro-controller 142 may activate the second sensor 202 when the vibrational signal sensed by accelerometer 202a exceeds a threshold. Such a condition may indicate that the mechanical component 110a-110f is activated and operating. The received configuration may define the second sensor 202 to be activated under such a condition. It is understood that the second sensor 202 may include one or more sensors of the plurality of sensors 202. For example, more than one sensor of the plurality of sensors 202 may be activated as defined in the received configuration.

In step 1125, micro-controller 142 may collect data from the second sensor 202 relating to a second parameter of the mechanical component 110a-110f. The data may be collected for a predetermined amount of time based on the type of mechanical component 110a-110f on which node device 140 is mounted (e.g., based on the received configuration). For example, micro-controller 142 may collect data for one minute when node device 140 is mounted on an air turbine starter system as this is the amount of time until the starter is engaged to start the main aircraft engines. It is understood that micro-controller 142 may collect data from one or more of the plurality of sensors 202 in step 1125. For example, micro-controller 142 may activate and collect data from a third sensor, a fourth sensor, a fifth sensor, etc. as defined in the received configuration.

In some embodiments, micro-controller 142 may detect a change in a condition of the mechanical component 110a-110f. Micro-controller 142 may determine an updated level of energy harvesting available at the multi-sensor node device 140. Micro-controller 142 may then determine to activate the second sensor 202 also based on the determined updated level of energy harvesting available at the multi-sensor node device 140. Micro-controller 142 may determine to activate the second sensor or increase a rate of collection of data from the first sensor and/or second sensor upon determining that the updated level of energy harvesting available at the multi-sensor node device 140 indicates a threshold is exceeded. For example, micro-controller 142 may determine to activate the second sensor or increase the rate collection of data if the level of energy harvesting increases.

In step 1130, micro-controller 142 may determine an initial health indication of the mechanical component 110a-110f based at least in part on the collected data from the second sensor. For example, micro-controller 142 may combine the collected data of the different parameters sensed by each of the activated plurality of sensors 202. Micro-controller 142 may then predict a remaining useful life of the mechanical component 110a-110f based on the combined collected data. In some embodiments, micro-controller 142 may generate a model of the predicted health of the mechanical component 110a-110f over time based on the combined collected data. For example, combining data of temperature, vibration, acoustics, etc. to determine the health of a component may provide for a more accurate profile of the remaining useful life. Micro-controller 142 may determine an acceptable operating zone for the mechanical component 110a-110f based on the model. Micro-controller 142 may then determine when the predicted health decreases outside the acceptable operating zone and output an indication of a failure accordingly. In this way, predictive maintenance may be utilized to detect faults before failure occurs. Micro-controller 142 may use the monitored parameters to perform edge analytics or computing and may use artificial intelligence inferencing and/or machine learning to predict the remaining useful life of the component 110a-1 10f.

In step 1135, micro-controller 142 may transmit the determined initial health indication to a remote computing system 160 for further analytics. For example, computing system 160 may utilize artificial intelligence and/or machine learning algorithms to predict the remaining useful life.

FIG. 12 depicts a high-level functional block diagram of an exemplary computer device or system, in which embodiments of the present disclosure, or portions thereof, may be implemented, e.g., as computer-readable code. For example, each of the exemplary systems, user interfaces and methods described above with respect to FIGS. 1-11 can be implemented in device 1200 using hardware, software, firmware, tangible computer readable media having instructions stored thereon, or a combination thereof and may be implemented in one or more computer systems or other processing systems. Hardware, software, or any combination of such may implement each of the exemplary systems, user interfaces, and methods described above with respect to FIGS. 1-11.

If programmable logic is used, such logic may execute on a commercially available processing platform or a special purpose device. One of ordinary skill in the art may appreciate that embodiments of the disclosed subject matter can be practiced with various computer system configurations, including multi-core multiprocessor systems, minicomputers, mainframe computers, computer linked or clustered with distributed functions, as well as pervasive or miniature computers that may be embedded into virtually any device.

For instance, at least one processor device and a memory may be used to implement the above-described embodiments. A processor device may be a single processor, a plurality of processors, or combinations thereof. Processor devices may have one or more processor "cores."

Various embodiments of the present disclosure, as described above in the examples of FIGS. 1-11 may be implemented using device 1200. After reading this description, it will become apparent to a person skilled in the relevant art how to implement embodiments of the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the scope of the disclosed subject matter.

As shown in FIG. 12, device 1200 may include a central processing unit (CPU) 1220. CPU 1220 may be any type of processor device including, for example, any type of special purpose or a general-purpose microprocessor device. As will be appreciated by persons skilled in the relevant art, CPU 1220 also may be a single processor in a multi-core/multiprocessor system, such system operating alone, or in a cluster of computing devices operating in a cluster or server farm. CPU 1220 may be connected to a data communication infrastructure 1210, for example, a bus, message queue, network, or multi-core message-passing scheme.

Device 1200 may also include a main memory 1240, for example, random access memory (RAM), and may also include a secondary memory 1230. Secondary memory 1230, e.g., a read-only memory (ROM), may be, for example, a hard disk drive or a removable storage drive. Such a removable storage drive may comprise, for example, a floppy disk drive, a magnetic tape drive, an optical disk drive, a flash memory, or the like. The removable storage drive in this example reads from and/or writes to a removable storage unit in a well-known manner. The removable storage unit may comprise a floppy disk, magnetic tape, optical disk, etc., which is read by and written to by the removable storage drive. As will be appreciated by persons skilled in the relevant art, such a removable storage unit generally includes a computer usable storage medium having stored therein computer software and/or data.

In alternative implementations, secondary memory 1230 may include other similar means for allowing computer programs or other instructions to be loaded into device 1200. Examples of such means may include a program cartridge and cartridge interface (such as that found in video game devices), a removable memory chip (such as an EPROM, or PROM) and associated socket, and other removable storage units and interfaces, which allow software and data to be transferred from a removable storage unit to device 1200.

Device 1200 may also include a communications interface ("COM") 1260. Communications interface 1260 allows software and data to be transferred between device 1200 and external devices. Communications interface 1260 may include a modem, a network interface (such as an Ethernet card), a communications port, a PCMCIA slot and card, or the like. Software and data transferred via communications interface 1260 may be in the form of signals, which may be electronic, electromagnetic, optical, or other signals capable of being received by communications interface 1260. These signals may be provided to communications interface 1260 via a communications path of device 1200, which may be implemented using, for example, wire or cable, fiber optics, a phone line, a cellular phone link, an RF link or other communications channels.

The hardware elements, operating systems and programming languages of such equipment are conventional in nature, and it is presumed that those skilled in the art are adequately familiar therewith. Device 1200 also may include input and output ports 1250 to connect with input and output devices such as keyboards, mice, touchscreens, monitors, displays, etc. Of course, the various server functions may be implemented in a distributed fashion on a number of similar platforms, to distribute the processing load. Alternatively, the servers may be implemented by appropriate programming of one computer hardware platform.

The systems, apparatuses, devices, and methods disclosed herein are described in detail by way of examples and with reference to the figures. The examples discussed herein are examples only and are provided to assist in the explanation of the apparatuses, devices, systems, and methods described herein. None of the features or components shown in the drawings or discussed below should be taken as mandatory for any specific implementation of any of these the apparatuses, devices, systems, or methods unless specifically designated as mandatory. For ease of reading and clarity, certain components, modules, or methods may be described solely in connection with a specific figure. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such. Any failure to specifically describe a combination or sub-combination of components should not be understood as an indication that any combination or sub-combination is not possible. It will be appreciated that modifications to disclosed and described examples, arrangements, configurations, components, elements, apparatuses, devices, systems, methods, etc. can be made and may be desired for a specific application. Also, for any methods described, regardless of whether the method is described in conjunction with a flow diagram, it should be understood that unless otherwise specified or required by context, any explicit or implicit ordering of steps performed in the execution of a method does not imply that those steps must be performed in the order presented but instead may be performed in a different order or in parallel.

Throughout this disclosure, references to components or modules generally refer to items that logically can be grouped together to perform a function or group of related functions. Like reference numerals are generally intended to refer to the same or similar components. Components and modules can be implemented in software, hardware, or a combination of software and hardware. The term "software" is used expansively to include not only executable code, for example machine-executable or machine-interpretable instructions, but also data structures, data stores and computing instructions stored in any suitable electronic format, including firmware, and embedded software. The terms "information" and "data" are used expansively and includes a wide variety of electronic information, including executable code; content such as text, video data, and audio data, among others; and various codes or flags. The terms "information," "data," and "content" are sometimes used interchangeably when permitted by context.

It is intended that the specification and examples be considered as exemplary only, with a true scope of the disclosure being indicated by the following claims.

## Claims

1. A method for determining a health indication of a mechanical component (110), the method comprising:
receiving, by a processor (142) of a multi-sensor node device (140) having a plurality of sensors (202), a configuration defining activation of the plurality of sensors based on a type of mechanical component to which the multi-sensor node device is coupled and based on a level of energy harvesting available at the multi-sensor node device;
determining, by the processor of the multi-sensor node device, to activate a first sensor of the plurality of sensors based on the received configuration;
collecting, by the processor of the multi-sensor node device, data from the first sensor relating to a first parameter of the mechanical component;
determining, by the processor of the multi-sensor node device, to activate a second sensor of the plurality of sensors based on determining that the data collected from the first sensor indicates a threshold is exceeded;
collecting, by the processor of the multi-sensor node device, data from the second sensor relating to a second parameter of the mechanical component;
determining, by the processor of the multi-sensor node device, an initial health indication of the mechanical component based at least in part on the data collected from the second sensor; and
transmitting, by the processor of the multi-sensor node device, the determined initial health indication of the mechanical component to a remote computing system.

2. The method of claim 1, further comprising:
detecting, by the processor (142) of the multi-sensor node device (140), a change in a condition of the mechanical component (110); and
determining, by the processor of the multi-sensor node device, an updated level of energy harvesting available at the multi-sensor node device.

3. The method of claim 2, further comprising:
determining, by the processor (142) of the multi-sensor node device (140), to activate the second sensor also based on the determined updated level of energy harvesting available at the multi-sensor node device.

4. The method of claim 2, further comprising:
determining, by the processor (142) of the multi-sensor node device (140), to activate the second sensor or increase a rate of collection of data from the first sensor and/or second sensor upon determining that the updated level of energy harvesting available at the multi-sensor node device indicates a threshold is exceeded.

5. The method of claim 1, further comprising:
harvesting, by the processor (142) of the multi-sensor node device (140), energy from the mechanical component via one or more energy harvesting devices of the multi-sensor node device; and
storing, by the one or more processors, the harvested energy in a storage module of the multi-sensor node device.

6. The method of claim 5, wherein the harvested energy includes at least one of vibrational energy, rotational or motion energy, or thermal energy.

7. The method of claim 1, further comprising: determining that the data collected from the first sensor exceeds a threshold by monitoring the first sensor for detection of a trigger.

8. The method of claim 7, further comprising: when the trigger is detected, activating, by the one or more processors, the second sensor of the plurality of sensors.

9. The method of claim 1, wherein collecting, by the processor (142) of the multi-sensor node device (140), data from the first sensor relating to the first parameter of the mechanical component includes collecting the data for a predetermined amount of time based on a type of the mechanical component (110).

10. The method of claim 1, wherein determining the initial health indication of the mechanical component (110) based on the collected data includes:
combining, by the processor (142), the collected data from the first sensor and the second sensor of the plurality of sensors; and
predicting, by the processor (142), a condition or a remaining useful life of the mechanical component based on the combined collected data.

11. The method of claim 10, wherein predicting the remaining useful life of the mechanical component based on the combined collected data includes:
generating, by the processor, a model of the health indication of the mechanical component over time based on the combined collected data;
determining, by the processor, an acceptable operating zone for the mechanical component based on the model; and
outputting, by the processor, an indication of a failure of the mechanical component when the health indication of the mechanical component decreases outside of the acceptable operating zone.

12. A multi-sensor node device (140), comprising:
a plurality of sensors (202) configured to collect data from a mechanical component;
a memory device (144) storing instructions for determining a health indication of the mechanical component; and
a processor (142), when executing the instructions, configured to perform a method including:
receiving a configuration defining a subset of the plurality of sensors (202) to be activated based on a type of the mechanical component to which the multi-sensor node device (140) is coupled and based on a level of energy harvesting available at the multi-sensor node device;
determining to activate a first sensor of the plurality of sensors based on the received configuration;
collecting data from the first sensor relating to a first parameter of the mechanical component;
determining to activate a second sensor of the plurality of sensors based on determining that the data collected from the first sensor indicates a threshold is exceeded;
collecting data from the second sensor relating to a second parameter of the mechanical component;
determining an initial health indication of the mechanical component based at least in part on the data collected from the second sensor; and
transmitting the determined initial health indication of the mechanical component to a remote computing system.

13. The multi-sensor node device (140) of claim 12, wherein the processor (142) is configured to perform the method further including:
detecting, by the processor of the multi-sensor node device, a change in a condition of the mechanical component; and
determining, by the processor of the multi-sensor node device, an updated level of energy harvesting available at the multi-sensor node device.

14. The multi-sensor node device (140) of claim 13, wherein the processor (142) is configured to perform the method further including:
determining, by the processor of the multi-sensor node device, to activate the second sensor also based on the determined updated level of energy harvesting available at the multi-sensor node device.

15. The multi-sensor node device (140) of claim 13, wherein the processor (142) is configured to perform the method further including:
activating the second sensor or increasing a rate of collection of data from the first sensor and/or second sensor upon determining that the determined updated level of energy harvesting available at the multi-sensor node device indicates a threshold is exceeded.

## Patentansprüche

1. Verfahren zum Bestimmen einer Zustandsanzeige eines mechanischen Bauteils (110), wobei das Verfahren Folgendes umfasst:
Empfangen, durch einen Prozessor (142) einer eine Vielzahl von Sensoren (202) aufweisenden Multisensor-Knotenvorrichtung (140), einer Konfiguration, welche die Aktivierung der Vielzahl von Sensoren basierend auf einem Typ von mechanischem Bauteil definiert, mit dem die Multisensor-Knotenvorrichtung gekoppelt ist, und basierend auf einem an der Multisensor-Knotenvorrichtung verfügbaren Niveau der Energiegewinnung;
Bestimmen, durch den Prozessor der Multisensor-Knotenvorrichtung, dass ein erster Sensor der Vielzahl von Sensoren basierend auf der empfangenen Konfiguration aktiviert wird;
Erfassen, durch den Prozessor der Multisensor-Knotenvorrichtung, von Daten von dem ersten Sensor, die sich auf einen ersten Parameter des mechanischen Bauteils beziehen;
Bestimmen, durch den Prozessor der Multisensor-Knotenvorrichtung, dass ein zweiter Sensor der Vielzahl von Sensoren aktiviert wird, basierend auf dem Bestimmen, dass die von dem ersten Sensor erfassten Daten die Überschreitung eines Schwellenwerts anzeigen;
Erfassen, durch den Prozessor der Multisensor-Knotenvorrichtung, von Daten von dem zweiten Sensor, die sich auf einen zweiten Parameter des mechanischen Bauteils beziehen;
Bestimmen, durch den Prozessor der Multisensor-Knotenvorrichtung, einer anfänglichen Zustandsanzeige des mechanischen Bauteils, die mindestens teilweise auf den von dem zweiten Sensor erfassten Daten basiert; und
Übermitteln, durch den Prozessor der Multisensor-Knotenvorrichtung, der bestimmten anfänglichen Zustandsanzeige des mechanischen Bauteils an ein entferntes Computersystem.

2. Verfahren nach Anspruch 1, das ferner Folgendes umfasst:
Detektieren, durch den Prozessor (142) der Multisensor-Knotenvorrichtung (140), einer Änderung eines Zustands des mechanischen Bauteils (110); und
Bestimmen, durch den Prozessor der Multisensor-Knotenvorrichtung, eines an der Multisensor-Knotenvorrichtung verfügbaren aktualisierten Niveaus der Energiegewinnung.

3. Verfahren nach Anspruch 2, das ferner Folgendes umfasst:
Bestimmen, durch den Prozessor (142) der Multisensor-Knotenvorrichtung (140), dass der zweite Sensor ebenfalls basierend auf dem an der Multisensor-Knotenvorrichtung verfügbaren bestimmten aktualisierten Niveau der Energiegewinnung aktiviert wird.

4. Verfahren nach Anspruch 2, das ferner Folgendes umfasst:
Bestimmen, durch den Prozessor (142) der Multisensor-Knotenvorrichtung (140), dass der zweite Sensor aktiviert wird oder eine Datenerfassungsrate von dem ersten Sensor und/oder dem zweiten Sensor erhöht wird, nachdem bestimmt wurde, dass das an der Multisensor-Knotenvorrichtung verfügbare aktualisierte Niveau der Energiegewinnung das Überschreiten eines Schwellenwerts anzeigt.

5. Verfahren nach Anspruch 1, das ferner Folgendes umfasst:
Gewinnen, durch den Prozessor (142) der Multisensor-Knotenvorrichtung (140), von Energie von dem mechanischen Bauteil über eine oder mehrere Energiegewinnungsvorrichtungen der Multisensor-Knotenvorrichtung; und
Speichern, durch den einen oder mehrere Prozessoren, der gewonnenen Energie in einem Speichermodul der Multisensor-Knotenvorrichtung.

6. Verfahren nach Anspruch 5, wobei die gewonnene Energie mindestens eines von Vibrationsenergie, Rotations- oder Bewegungsenergie oder Wärmeenergie einschließt.

7. Verfahren nach Anspruch 1, das ferner Folgendes umfasst: Bestimmen, dass die vom ersten Sensor erfassten Daten einen Schwellenwert überschreiten, indem der erste Sensor auf die Detektion eines Auslösers hin überwacht wird.

8. Verfahren nach Anspruch 7, das ferner Folgendes umfasst: wenn der Auslöser detektiert wird, Aktivieren des zweiten Sensors der Vielzahl von Sensoren durch den einen oder mehrere Prozessoren.

9. Verfahren nach Anspruch 1, wobei das Erfassen, durch den Prozessor (142) der Multisensor-Knotenvorrichtung (140), von Daten von dem ersten Sensor, die sich auf den ersten Parameter des mechanischen Bauteils beziehen, das Erfassen der Daten für eine vorbestimmte Zeitspanne basierend auf einem Typ des mechanischen Bauteils (110) einschließt.

10. Verfahren nach Anspruch 1, wobei das Bestimmen der anfänglichen Zustandsanzeige des mechanischen Bauteils (110) basierend auf den erfassten Daten Folgendes einschließt:
Kombinieren, durch den Prozessor (142), der erfassten Daten von dem ersten Sensor und dem zweiten Sensor der Vielzahl von Sensoren; und
Vorhersagen, durch den Prozessor (142), eines Zustands oder einer verbleibenden Nutzungsdauer des mechanischen Bauteils, basierend auf den kombinierten erfassten Daten.

11. Verfahren nach Anspruch 10, wobei das Vorhersagen der verbleibenden Nutzungsdauer des mechanischen Bauteils basierend auf den kombinierten erfassten Daten Folgendes einschließt:
Generieren, durch den Prozessor, eines Modells der Zustandsanzeige des mechanischen Bauteils über die Zeit basierend auf den kombinierten erfassten Daten;
Bestimmen, durch den Prozessor, eines akzeptablen Betriebsbereichs für das mechanische Bauteil basierend auf dem Modell; und
Ausgeben, durch den Prozessor, einer Anzeige eines Ausfalls des mechanischen Bauteils, wenn die Zustandsanzeige des mechanischen Bauteils den akzeptablen Betriebsbereich unterschreitet.

12. Multisensor-Knotenvorrichtung (140), die Folgendes umfasst:
eine Vielzahl von Sensoren (202), die konfiguriert sind, um Daten von einem mechanischen Bauteil zu erfassen;
eine Speichervorrichtung (144), die Anweisungen zum Bestimmen einer Zustandsanzeige des mechanischen Bauteils speichert; und
einen Prozessor (142), der konfiguriert ist, um beim Ausführen der Anweisungen ein Verfahren durchzuführen, das Folgendes einschließt:
Empfangen einer Konfiguration, die eine Untergruppe der Vielzahl von Sensoren (202) definiert, die basierend auf einem Typ des mechanischen Bauteils, mit dem die Multisensor-Knotenvorrichtung (140) gekoppelt ist, und basierend auf einem an der Multisensor-Knotenvorrichtung verfügbaren Niveau der Energiegewinnung zu aktivieren sind;
Bestimmen, dass ein erster Sensor der Vielzahl von Sensoren basierend auf der empfangenen Konfiguration aktiviert wird;
Erfassen von Daten von dem ersten Sensor, die sich auf einen ersten Parameter des mechanischen Bauteils beziehen;
Bestimmen, dass ein zweiter Sensor der Vielzahl von Sensoren aktiviert wird, basierend auf dem Bestimmen, dass die von dem ersten Sensor erfassten Daten die Überschreitung eines Schwellenwerts anzeigen;
Erfassen von Daten von dem zweiten Sensor, die sich auf einen zweiten Parameter des mechanischen Bauteils beziehen;
Bestimmen einer anfänglichen Zustandsanzeige des mechanischen Bauteils mindestens teilweise basierend auf den von dem zweiten Sensor erfassten Daten; und
Übertragen der bestimmten anfänglichen Zustandsanzeige des mechanischen Bauteils an ein entferntes Computersystem.

13. Multisensor-Knotenvorrichtung (140) nach Anspruch 12, wobei der Prozessor (142) konfiguriert ist, um das Verfahren durchzuführen, das ferner Folgendes einschließt:
Detektieren, durch den Prozessor der Multisensor-Knotenvorrichtung, einer Änderung eines Zustands des mechanischen Bauteils; und
Bestimmen, durch den Prozessor der Multisensor-Knotenvorrichtung, eines an der Multisensor-Knotenvorrichtung verfügbaren aktualisierten Niveaus der Energiegewinnung.

14. Multisensor-Knotenvorrichtung (140) nach Anspruch 13, wobei der Prozessor (142) konfiguriert ist, um das Verfahren durchzuführen, das ferner Folgendes einschließt:
Bestimmen, durch den Prozessor der Multisensor-Knotenvorrichtung, dass der zweite Sensor ebenfalls basierend auf dem an der Multisensor-Knotenvorrichtung verfügbaren bestimmten aktualisierten Niveau der Energiegewinnung aktiviert wird.

15. Multisensor-Knotenvorrichtung (140) nach Anspruch 13, wobei der Prozessor (142) konfiguriert ist, um das Verfahren durchzuführen, das ferner Folgendes einschließt:
Aktivieren des zweiten Sensors oder Erhöhen einer Datenerfassungsrate von dem ersten Sensor und/oder dem zweiten Sensor, nachdem bestimmt wurde, dass das an der Multisensor-Knotenvorrichtung verfügbare bestimmte aktualisierte Niveau der Energiegewinnung das Überschreiten eines Schwellenwerts anzeigt.

## Revendications

1. Procédé de détermination d'une indication de santé d'un composant mécanique (110), le procédé comprenant :
la réception, par un processeur (142) d'un dispositif de noeud multi-capteurs (140) ayant une pluralité de capteurs (202), d'une configuration définissant l'activation de la pluralité de capteurs sur la base d'un type de composant mécanique auquel le dispositif de noeud multi-capteurs est couplé et sur la base d'un niveau de récupération d'énergie disponible au niveau du dispositif de noeud multi-capteurs ;
la détermination, par le processeur du dispositif de noeud multi-capteurs, de l'activation d'un premier capteur de la pluralité de capteurs sur la base de la configuration reçue ;
la collecte, par le processeur du dispositif de noeud multi-capteurs, de données à partir du premier capteur concernant un premier paramètre du composant mécanique ;
la détermination, par le processeur du dispositif de noeud multi-capteurs, de l'activation d'un deuxième capteur de la pluralité de capteurs sur la base de la détermination du fait que les données collectées à partir du premier capteur indiquent qu'un seuil est dépassé ;
la collecte, par le processeur du dispositif de noeud multi-capteurs, de données à partir du deuxième capteur concernant un deuxième paramètre du composant mécanique ;
la détermination, par le processeur du dispositif de noeud multi-capteurs, d'une indication de santé initiale du composant mécanique sur la base au moins en partie des données collectées à partir du deuxième capteur ; et
la transmission, par le processeur du dispositif de noeud multi-capteurs, de l'indication de santé initiale déterminée du composant mécanique à un système informatique distant.

2. Procédé selon la revendication 1, comprenant en outre :
la détection, par le processeur (142) du dispositif de noeud multi-capteurs (140), d'un changement dans un état du composant mécanique (110) ; et
la détermination, par le processeur du dispositif de noeud multi-capteurs, d'un niveau actualisé de récupération d'énergie disponible au niveau du dispositif de noeud multi-capteurs.

3. Procédé selon la revendication 2, comprenant en outre :
la détermination, par le processeur (142) du dispositif de noeud multi-capteurs (140), de l'activation du deuxième capteur également sur la base du niveau actualisé déterminé de récupération d'énergie disponible au niveau du dispositif de noeud multi-capteurs.

4. Procédé selon la revendication 2, comprenant en outre :
la détermination, par le processeur (142) du dispositif de noeud multi-capteurs (140), de l'activation du deuxième capteur ou de l'augmentation d'un taux de collecte de données à partir du premier capteur et/ou du deuxième capteur lors de la détermination que le niveau actualisé de récupération d'énergie disponible au niveau du dispositif du noeud multi-capteurs indique qu'un seuil est dépassé.

5. Procédé selon la revendication 1, comprenant en outre :
la récupération, par le processeur (142) du dispositif de noeud multi-capteurs (140), d'énergie à partir du composant mécanique via un ou plusieurs dispositifs de récupération d'énergie du dispositif de noeud multi-capteurs ; et
le stockage, par les un ou plusieurs processeurs, de l'énergie récupérée dans un module de stockage du dispositif de noeud multi-capteurs.

6. Procédé selon la revendication 5, dans lequel l'énergie récupérée inclut au moins l'une d'une énergie vibratoire, d'une énergie de rotation ou de mouvement ou d'une énergie thermique.

7. Procédé selon la revendication 1, comprenant en outre : la détermination du fait que les données collectées à partir du premier capteur dépassent un seuil en surveillant le premier capteur pour la détection d'un déclencheur.

8. Procédé selon la revendication 7, comprenant en outre : lorsque le déclencheur est détecté, l'activation, par les un ou plusieurs processeurs, du deuxième capteur de la pluralité de capteurs.

9. Procédé selon la revendication 1, dans lequel la collecte, par le processeur (142) du dispositif de noeud multi-capteurs (140), de données à partir du premier capteur concernant le premier paramètre du composant mécanique inclut la collecte des données pendant une durée prédéterminée sur la base d'un type du composant mécanique (110).

10. Procédé selon la revendication 1, dans lequel la détermination de l'indication de santé initiale du composant mécanique (110) sur la base des données collectées inclut :
la combinaison, par le processeur (142), des données collectées à partir du premier capteur et du deuxième capteur de la pluralité de capteurs ; et
la prédiction, par le processeur (142), d'un état ou d'une durée de vie utile restante du composant mécanique sur la base des données collectées combinées.

11. Procédé selon la revendication 10, dans lequel la prédiction de la durée de vie utile restante du composant mécanique sur la base des données collectées combinées inclut :
la génération, par le processeur, d'un modèle de l'indication de santé du composant mécanique au fil du temps sur la base des données collectées combinées ;
la détermination, par le processeur, d'une zone de fonctionnement acceptable pour le composant mécanique sur la base du modèle ; et
l'émission, par le processeur, d'une indication d'une défaillance du composant mécanique lorsque l'indication de santé du composant mécanique diminue en dehors de la zone de fonctionnement acceptable.

12. Dispositif de noeud multi-capteurs (140), comprenant :
une pluralité de capteurs (202) configurés pour collecter des données à partir d'un composant mécanique ;
un dispositif de mémoire (144) stockant des instructions pour déterminer une indication de santé du composant mécanique ; et
un processeur (142), lors de l'exécution des instructions, configuré pour réaliser un procédé incluant :
la réception d'une configuration définissant un sous-ensemble de la pluralité de capteurs (202) à activer sur la base d'un type du composant mécanique auquel le dispositif de noeud multi-capteurs (140) est couplé et sur la base d'un niveau de récupération d'énergie disponible au niveau du dispositif de noeud multi-capteurs ;
la détermination de l'activation d'un premier capteur de la pluralité de capteurs sur la base de la configuration reçue ;
la collecte de données à partir du premier capteur concernant un premier paramètre du composant mécanique ;
la détermination de l'activation d'un deuxième capteur de la pluralité de capteurs sur la base de la détermination du fait que les données collectées à partir du premier capteur indiquent qu'un seuil est dépassé ;
la collecte de données à partir du deuxième capteur concernant un deuxième paramètre du composant mécanique ;
la détermination d'une indication de santé initiale du composant mécanique sur la base au moins en partie des données collectées à partir du deuxième capteur ; et
la transmission de l'indication de santé initiale déterminée du composant mécanique à un système informatique distant.

13. Dispositif de noeud multi-capteurs (140) selon la revendication 12, dans lequel le processeur (142) est configuré pour réaliser le procédé incluant en outre :
la détection, par le processeur du dispositif de noeud multi-capteurs, d'un changement dans un état du composant mécanique ; et
la détermination, par le processeur du dispositif de noeud multi-capteurs, d'un niveau actualisé de récupération d'énergie disponible au niveau du dispositif de noeud multi-capteurs.

14. Dispositif de noeud multi-capteurs (140) selon la revendication 13, dans lequel le processeur (142) est configuré pour réaliser le procédé incluant en outre :
la détermination, par le processeur du dispositif de noeud multi-capteurs, de l'activation du deuxième capteur également sur la base du niveau actualisé déterminé de récupération d'énergie disponible au niveau du dispositif de noeud multi-capteurs.

15. Dispositif de noeud multi-capteurs (140) selon la revendication 13, dans lequel le processeur (142) est configuré pour réaliser le procédé incluant en outre :
l'activation du deuxième capteur ou l'augmentation d'un taux de collecte de données à partir du premier capteur et/ou du deuxième capteur lors de la détermination que le niveau actualisé déterminé de récupération d'énergie disponible au niveau du dispositif de noeud multi-capteurs indique qu'un seuil est dépassé.
